# EUROPEAN PATENT APPLICATION

(11) **EP 1 679 174 A1**
(43) Date of publication of application: **12.07.2006**
(21) Application number: 06000415.7
(22) Date of filing: 10.01.2006
(51) Int. Cl.: B29C 45/42, B29C 37/00, B25J 9/06

(54) **Formed article taking-out apparatus and forming machine**

(30) Priority: 11.01.2005 JP 2005003794
(71) Applicant: FANUC LTD, Minamitsuru-gun, Yamanashi 401-0597 (JP)
(72) Inventor: Kinoshita, Satoshi, Yamanashi 401-0511 (JP); Yasumura, Mitsuhiro, Minamitsuru-gun Yamanashi 401-0302 (JP); Takikawa, Ryuji, Fujiyoshida-shi Yamanashi 403-0015 (JP)
(74) Representative: Thum, Bernhard

(57) **Abstract**

A formed article taking-out apparatus (10) used for taking out a formed article from a forming machine (12). The apparatus includes a base (14) able to be secured to a forming machine (12); a first arm (16) attached to the base (14) rotatably about a first axis; a second arm (18) attached to the first arm (16) rotatably about a second axis parallel to the first axis; a third arm (20) attached to the second arm (18) rotatably about a third axis parallel to the second axis; an elevating arm (22) linearly, movably attached to the third arm (20); a holding member (24) mounted on the elevating arm (22) for holding an object in the forming machine (12); a first-arm driving mechanism (26) driving the first arm (16) for rotation about the first axis; a second-arm driving mechanism (28) driving the second arm (18) for rotation about the second axis, independently of the first-arm driving mechanism (26); a third-arm driving mechanism driving (30) the third arm (20) for rotation about the third axis, independently of the first (26) and second-arm (28) driving mechanisms; and an elevating-arm driving mechanism (32) linearly driving the elevating arm (22), independently of the first (26), second (28) and third-arm (30) driving mechanisms.

## Description

### BACKGROUND OF THE INVENTION

### 1. Field of the Invention

The present invention relates to a formed article taking-out apparatus for taking out a formed article from a forming machine. The present invention also relates to a forming machine provided with a formed article taking-out apparatus.

### 2. Description of the Related Art

It is known that, in various forming machines such as injection molding machines, press machines, etc., a formed article taking-out apparatus is provided, in which a holding mechanism operates to hold a formed article and/or its appendage (e.g., a runner) and automatically takes the formed article and/or the appendage out from a forming die after a forming process is completed. A conventional formed article taking-out apparatus is generally provided with a rectangular-coordinate arm structure having a plurality of linear-motion control axes, wherein a holding member capable of holding the formed article, etc. in the die is mounted on a distal end of an arm. There has also been proposed a formed article taking-out apparatus provided with a vertical articulated arm structure having a plurality of rotation control axes, in place of the rectangular-coordinate arm structure.

The conventional formed article taking-out apparatus having the rectangular-coordinate arm structure typically includes a base, with a horizontal guide, which is secured to the forming machine. The guide of the base extends in a horizontal direction (or an X-axis direction) so as to laterally project from the forming machine when the base is secured to the forming machine. A moving member including a guide arm extending in a horizontal direction orthogonal to the X-axis (or a Y-axis direction) is attached to the guide in a manner movable in the X-axis direction. The guide arm supports a taking-out mechanism for taking out a formed article and/or its appendage (e.g., a runner) in a manner movable in the Y-axis direction. The taking-out mechanism includes a holding member, such as a grasper (or a hand), a suction retainer, etc., provided in a manner movable in a vertical direction orthogonal to the X-axis and Y-axis (or a Z-axis direction). In this type of rectangular-coordinate arm structure, the holding member of the taking-out mechanism attached to a distal end of the arm structure can move in a desired direction in the X-Y-Z rectangular three-axis coordinate system, so as to hold the formed article and/or its appendage (e.g., a runner) in the die and to take them out from the die.

On the other hand, as described in Japanese Unexamined Patent Publication (Kokai) No. 10-95028 (JP-A-10-95028), the conventional formed article taking-out apparatus provided with the vertical articulated arm structure includes a base secured to the forming machine, a first arm attached to the base in a manner rotatable about a first axis extending in a horizontal direction on the forming machine, a second arm attached to the first arm in a manner rotatable about a second axis parallel with the first axis, and a holding member mounted on a distal end of the second arm and capable of holding an object in the forming machine. The vertical articulated arm structure is generally configured as a robot (or a manipulator) including a wrist axis at the distal end of the second arm, wherein the holding member mounted on the wrist axis can move in a desired direction under the various operations of the arm and wrist, so as to hold the formed article and/or its appendage (e.g., a runner) in the die and to take them out from the die. Japanese Unexamined Patent Publication (Kokai) No. 9-201849 (JP-A-9-201849) also discloses a formed article taking-out apparatus provided with a similar vertical articulated arm structure.

In the conventional formed article taking-out apparatus having the rectangular-coordinate arm structure as described above, a linear guide mechanism extending in the rectangular two or three axis directions is constantly provided in a stationary manner, so that the arm occupies a relatively large space, which results in several problems occurring when it is mounted on the forming machine. For example, at a site under a low ceiling, it may be difficult to mount the formed article taking-out apparatus on the top of the forming machine. Also, the base with horizontal guide is mounted on the forming machine in a stationary manner so as to laterally project from the forming machine, so that it is liable to be difficult to transport the forming machine while the formed article taking-out apparatus remains mounted thereon. In this case, the forming machine and the formed article taking-out apparatus have to be transported individually in a separated state and, as a result, it may take much effort to transport and install them.

Further, the linear-motion control axes provided in the rectangular-coordinate arm structure generally include a large number of components for a mechanical construction, so that it is liable to be difficult to reduce the manufacturing cost of the formed article taking-out apparatus. Moreover, in order to extend a linear motion stroke of each control axis, the existing linear-motion control-axis unit should be replaced by another linear-motion control-axis unit having a longer stroke. Therefore, in the configuration described above, the taking-out mechanism moving along the guide arm in the Y-axis direction has a problem such that it is not easy to change the stroke of the guide arm and, thus, it is typically and unseparably provided, in advance, with two taking-out mechanisms for the formed article and for its appendage (e.g., a runner). In other words, it is difficult to optionally add or omit the taking-out mechanism for the appendage (e.g., a runner), which thus may become a surplus mechanism.

On the other hand, in the conventional formed article taking-out apparatus having the vertical articulated arm structure as described above, when it is mounted on the forming machine, the arm operates along a vertical plane on the forming machine, so that it may be also difficult to mount the formed article taking-out apparatus on the top of the forming machine at a site under a low ceiling. Moreover, in the vertical articulated arm structure configured as a robot having a wrist axis, a radial dimension of the wrist tends to be larger in comparison with the holding member, due to its structure, so that, when the holding member is inserted into the die opened in the forming machine, the wrist may collide with the forming die to prevent the insertion of the holding member. In order to avoid this inconvenience, a longer holding member, accessible to the formed article, etc. in the die before the wrist collides with the die, should be used. However, it is typically difficult to handle such a longer holding member in a delicate manner at the time of a holding and a taking-out operation.

### SUMMARY OF THE INVENTION

It is an object of the present invention to provide a formed article taking-out apparatus for taking out a formed article from a forming machine, which can solve the problems, described above, in the conventional formed article taking-out apparatus provided with the rectangular-coordinate arm structure or the vertical articulated arm structure.

It is another object of the present invention to provide a forming machine provided with a formed article taking-out apparatus, which can solve the problems described above, occurring due to the provision of the conventional formed article taking-out apparatus provided with the rectangular-coordinate arm structure or the vertical articulated arm structure.

To accomplish the above objects, the present invention provides a formed article taking-out apparatus for use with a forming machine, comprising a base capable of being secured to a forming machine; a first arm attached to the base in a manner rotatable about a first axis; a second arm attached to the first arm in a manner rotatable about a second axis parallel with the first axis; a third arm attached to the second arm in a manner rotatable about a third axis parallel with the second axis; an elevating arm attached to the third arm in a linearly movable manner; a holding member mounted on the elevating arm and capable of holding an object in the forming machine; a first-arm driving mechanism driving the first arm for rotation about the first axis; a second-arm driving mechanism driving the second arm for rotation about the second axis, independently of the first-arm driving mechanism; a third-arm driving mechanism driving the third arm for rotation about the third axis, independently of the first-arm driving mechanism and the second-arm driving mechanism; and an elevating-arm driving mechanism linearly driving the elevating arm, independently of the first-arm driving mechanism, the second-arm driving mechanism and the third-arm driving mechanism.

The above-described formed article taking-out apparatus may further comprise an auxiliary arm assembly attached to the third arm in a manner operatable independently of the elevating arm; and a second holding member mounted on the auxiliary arm assembly and capable of holding another object in the forming machine.

In this arrangement, the auxiliary arm assembly may include an intermediate base detachably attached to the third arm; a fourth arm attached to the intermediate base in a manner rotatable about a fourth axis parallel with the third axis; a fifth arm attached to the fourth arm in a manner rotatable about a fifth axis parallel with the fourth axis; a sixth arm attached to the fifth arm in a manner rotatable about a sixth axis parallel with the fifth axis; a second elevating arm attached to the sixth arm in a linearly movable manner; and the second holding member mounted on the second elevating arm.

In the above-described formed article taking-out apparatus, each of the first arm, the second arm and the third arm may have a hollow structure; and an umbilical member, including a power supply cable connected to the first-arm driving mechanism, the second-arm driving mechanism, the third-arm driving mechanism and the elevating-arm driving mechanism, may be laid and accommodated in hollow regions of the first arm, the second arm and the third arm.

In this arrangement, the formed article taking-out apparatus may further comprise a first-arm support member supporting the first arm in a manner rotatable relative to the base; a second-arm support member supporting the second arm in a manner rotatable relative to the first arm; and a third-arm support member supporting the third arm in a manner rotatable relative to the second arm; each of the first-arm support member, the second-arm support member and the third-arm support member may have a hollow structure; and the umbilical member may be laid and inserted through hollow regions of the first-arm support member, the second-arm support member and the third-arm support member.

According to the present invention, there is further provided a forming machine including the formed article taking-out apparatus described above.

### BRIEF DESCRIPTION OF THE DRAWINGS

The above and other objects, features and advantages of the present invention will be more apparent from the following description of preferred embodiments in conjunction with the accompanying drawings, wherein:
Fig. 1 is a perspective view schematically showing a formed article taking-out apparatus according to an embodiment of the present invention as well as a forming machine, including the same, according to an embodiment of the present invention;
Fig. 2 is a schematic plan view typically showing the formed article taking-out apparatus of Fig. 1;
Fig. 3 is a schematic front view showing an internal structure of a main arm structure in the formed article taking-out apparatus of Fig. 1;
Fig. 4 is a schematic front view showing an internal structure of an auxiliary arm assembly in the formed article taking-out apparatus of Fig. 1;
Fig. 5 is a schematic plan view for explaining an example of use of the formed article taking-out apparatus of Fig. 1;
Fig. 6 is a schematic plan view of the forming machine of Fig. 1;
Figs. 7A to 7C are schematic plan views for explaining an example of operation of the formed article taking-out apparatus mounted on the forming machine of Fig. 1, showing conditions where a formed article is removed from a die, where a formed article is transferred, and where a formed article is fully displaced, respectively;
Fig. 8 is a schematic front view showing an umbilical member lying in the main arm structure of the formed article taking-out apparatus of Fig. 1;
Figs. 9A and 9B are schematic plan views for explaining an example of operation of the auxiliary arm assembly in the formed article taking-out apparatus of Fig. 1, showing an initial orientation and an orientation after the operation, respectively;
Fig. 10 is a schematic plan view for explaining an example of operation of an auxiliary arm assembly in the formed article taking-out apparatus of Fig. 1; and
Fig. 11 is a schematic front view showing an umbilical member lying in the auxiliary arm assembly of the formed article taking-out apparatus of Fig. 1.

### DETAILED DESCRIPTION

The applicant of the present application has proposed a novel formed article taking-out apparatus provided with a horizontal articulated arm structure in a preceding patent application (Japanese Patent Application No. 2004-64666) filed in Japan on March 8, 2004. The horizontal articulated arm structure provided in this apparatus includes a base secured to a forming machine, a first arm attached to the base in a manner rotatable about a first axis extending in a vertical direction on the forming machine, a second arm attached to the first arm in a manner rotatable about a second axis parallel with the first axis, a third arm attached to the second arm in a manner rotatable about a third axis parallel with the second axis, and a first elevating arm attached to the third arm in a linearly movable manner, wherein a first holding member capable of holding a formed article in the forming machine is mounted on the first elevating arm.

This horizontal articulated arm structure may optionally be provided, as occasion demands, with an auxiliary arm assembly for taking out another object (e.g., a runner) in the forming machine. The auxiliary arm assembly includes an intermediate base fixed to the third arm, a fourth arm attached to the intermediate base in a manner rotatable about a fourth axis parallel with the third axis, a fifth arm attached to the fourth arm in a manner rotatable about a fifth axis parallel with the fourth axis, a sixth arm attached to the fifth arm in a manner rotatable about a sixth axis parallel with the fifth axis, and a second elevating arm attached to the sixth arm in a linearly movable manner, wherein a second holding member capable of holding the other object (e.g., a runner) in the forming machine is mounted on the second elevating arm.

The horizontal articulated arm structure described above also includes a first-arm driving mechanism driving the first arm for rotation about the first axis, a second-arm driving mechanism driving the second arm for rotation about the second axis, and a first elevating-arm driving mechanism linearly driving the first elevating arm. Further, in relation to the auxiliary arm assembly, the horizontal articulated arm structure includes a fourth-arm driving mechanism driving the fourth arm for rotation about the fourth axis, and a second elevating-arm driving mechanism linearly driving the second elevating arm. In this connection, the third arm is not provided with an independent driving mechanism, but a pulley fixed to the third arm is connected to a motor output shaft of the second-arm driving mechanism through a belt in a synchronously operatable manner. Further, the second-arm driving mechanism is connected to a motor output shaft of the first-arm driving mechanism through a belt in a synchronously operatable manner. Accordingly, the third arm is shifted in a horizontal plane while maintaining a constant orientation, under motor power of either one or both of the first and second-arm driving mechanisms, in a manner as to follow the motion of one or both of the first and second arms.

In contrast to the conventional formed article taking-out apparatus provided with the rectangular-coordinate arm structure or the vertical articulated arm structure described above, the formed article taking-out apparatus with the horizontal articulated arm structure, proposed by the applicant of the present application in the preceding patent application (Japanese Patent Application No. 2004-64666), possesses clear advantages. One of the advantages results from the fact that a space occupied by the arm in the horizontal articulated arm structure is smaller than that in the rectangular-coordinate arm structure. More specifically, it is possible to mount the formed article taking-out apparatus on the top of the forming machine even at a site under a low ceiling, and also to facilitate the transportation of the forming machine, on which the formed article taking-out apparatus remains mounted, by shifting the arm into an orientation such as not to project laterally from the forming machine. Similarly, in comparison with the vertical articulated arm structure, in which the arm moves in a vertical plane on the forming machine, the horizontal articulated arm structure, in which the arm moves in a horizontal plane on the forming machine, has an advantage such that the formed article taking-out apparatus can be mounted on the top of the forming machine even at a site under a low ceiling. Furthermore, rotation control axes provided in the horizontal articulated arm structure require fewer mechanical structural components than those for the linear control axes in the rectangular-coordinate arm structure, which contributes to the reduction of the manufacturing costs of the formed article taking-out apparatus.

There is another advantage in that the horizontal articulated arm structure disclosed in the preceding patent application is not structured as a robot with a wrist axis but is provided with a holding member mounted on a linearly driven elevating arm attached to a distal end of a rotating arm. This configuration allows the holding member to be inserted into the die opened in the forming machine easily and accurately, without using a longer holding member that is inconvenient to handle. There is a further advantage in that, in addition to the main arm structure (from the first arm to the first elevating arm) for taking out the formed article in the forming machine, the auxiliary arm assembly may optionally be provided, as occasion demands, for taking out the other object (e.g., a runner) in the forming machine. In this configuration, it is possible to add or omit a taking-out mechanism for the object other than the formed article (e.g., a runner) as desired, and thus to solve the problem of a surplus mechanism. The formed article taking-out apparatus of the preceding patent application, possessing the above several advantages, has a significantly high degree of freedom and high usefulness, in comparison with a conventional horizontal articulated robot generally referred to as a SCARA robot.

Incidentally, in the formed article taking-out apparatus with the horizontal articulated arm structure disclosed in the preceding patent application, the third arm is not provided with an independent driving mechanism but is constructed to move in a horizontal plane while maintaining a constant orientation and following the motion of either one or both of the first and second arms, as described above. Consequently, in a case where the formed article is required, due to its large dimension, to be fully displaced into a predetermined location sufficiently spaced from the forming machine, such as a case where the above-described formed article taking-out apparatus is mounted on a large forming machine, the auxiliary arm assembly attached to the third arm, the orientation of which is not changed, may collide with other components such as the second arm, etc., which may make it difficult to smoothly displace the formed article or its appendage. Therefore, the preceding application has proposed a configuration in that it is possible to optionally change a securing position of the base of the formed article taking-out apparatus on the forming machine, and thus to allow a large formed article to be fully displaced into a predetermined location sufficiently spaced from the forming machine, without being obstructed by the components, such as the arm, of the taking-out apparatus.

The present invention has been made to allow the formed article to be fully displaced into a predetermined location sufficiently spaced from the forming machine, without being obstructed by the components, such as the arm, of the taking-out apparatus, through an approach different from the base-securing position changeable structure proposed in the above-described preceding patent application.

Now, the embodiments of the present invention are described below in detail, with reference to the accompanying drawings. In the drawings, the same or similar components are denoted by common reference numerals.

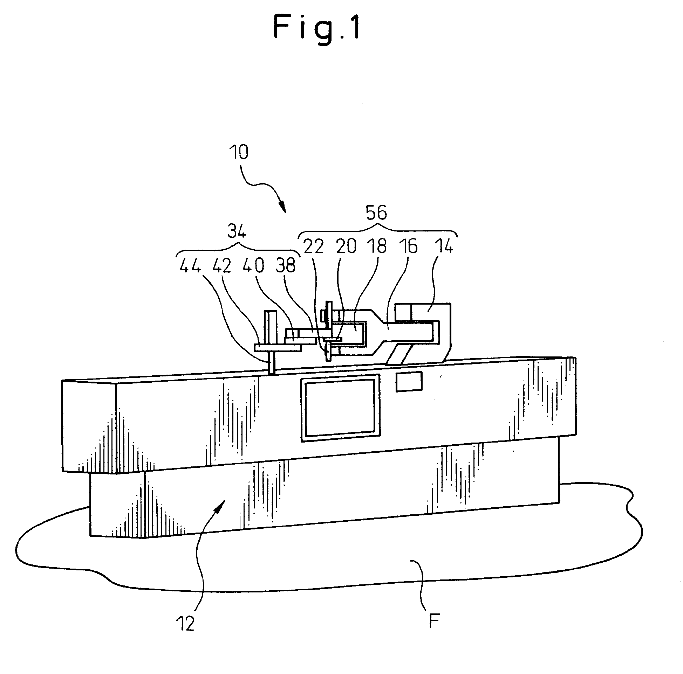

Referring to the drawings, Fig. 1 shows a formed article taking-out apparatus 10 according to an embodiment of the present invention, as well as a forming machine 12 according to an embodiment of the present invention and provided with the formed article taking-out apparatus 10. In the illustrated embodiment, the formed article taking-out apparatus 10 is mounted on a top surface of a stationary member (e.g., a stationary platen (not shown) carrying a stationary die (not shown), etc.) of the forming machine 12, and is configured to take out objects, such as a formed article or its appendage (e.g., a runner), from a forming die (not shown) opened in the forming machine 12.

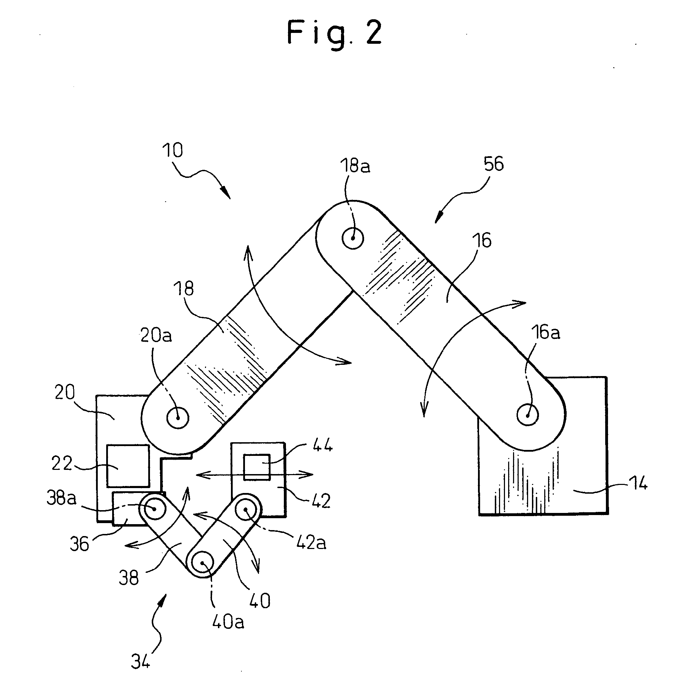

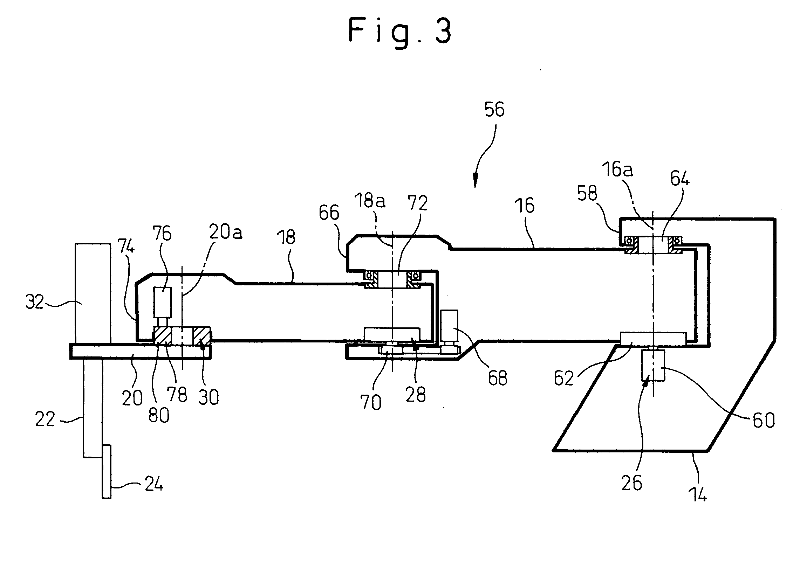

As shown in Figs. 1 and 2, the formed article taking-out apparatus 10 includes a base 14 adapted or able to be secured to the forming machine 12; a first arm 16 attached to the base 14 in a manner rotatable about a first axis 16a; a second arm 18 attached to the first arm 16 in a manner rotatable about a second axis 18a parallel with the first axis 16a; a third arm 20 attached to the second arm 18 in a manner rotatable about a third axis 20a parallel with the second axis 18a; and an elevating arm 22 attached to the third arm 20 in a linearly movable manner. A holding member 24 (Fig. 3), such as a grasper (or a hand), a suction retainer, etc., that can hold objects (a formed article, its appendage, etc.) in a forming die of the forming machine 12, is mounted on the elevating arm 22.

As shown in Fig. 3, the formed article taking-out apparatus 10 further includes a first-arm driving mechanism 26 driving the first arm 16 for rotation about the first axis 16a; a second-arm driving mechanism 28 driving the second arm 18 for rotation about the second axis 18a, independently of the first-arm driving mechanism 26; a third-arm driving mechanism 30 driving the third arm 20 for rotation about the third axis 20a, independently of the first-arm driving mechanism 26 and the second-arm driving mechanism 28; and an elevating-arm driving mechanism 32 linearly driving the elevating arm 22, independently of the first-arm driving mechanism 26, the second-arm driving mechanism 28 and the third-arm driving mechanism 30.

In the formed article taking-out apparatus 10, in a state where the base 14 is fixed to the stationary member of the forming machine 12, each of the first axis 16a, the second axis 18a and the third axis 20a is disposed vertically with respect to a floor surface F on which the forming machine 12 is installed, and the first arm 16, the second arm 18 and the third arm 20 thus constitute a horizontal articulated arm structure. Also, in the formed article taking-out apparatus 10, the first arm 16, the second arm 18, the third arm 20 and the elevating arm 22 are provided respectively with the driving mechanisms 26, 28, 30, 32 for exclusive use, independently of each other. Therefore, the first, second and third arms 16, 18, 20 act as manipulators having control axes independent of each other, and variously operate to locate the elevating arm 22 and the holding member 24, provide at the distal end thereof, at desired positions in a given horizontal plane on the forming machine 12. Further, the elevating arm 22 attached to the third arm 20 linearly operates by the elevating-arm driving mechanism 32 in a direction parallel with the third axis 20a, so as to smoothly take the holding member 24 in and out of the die opened in the forming machine 12.

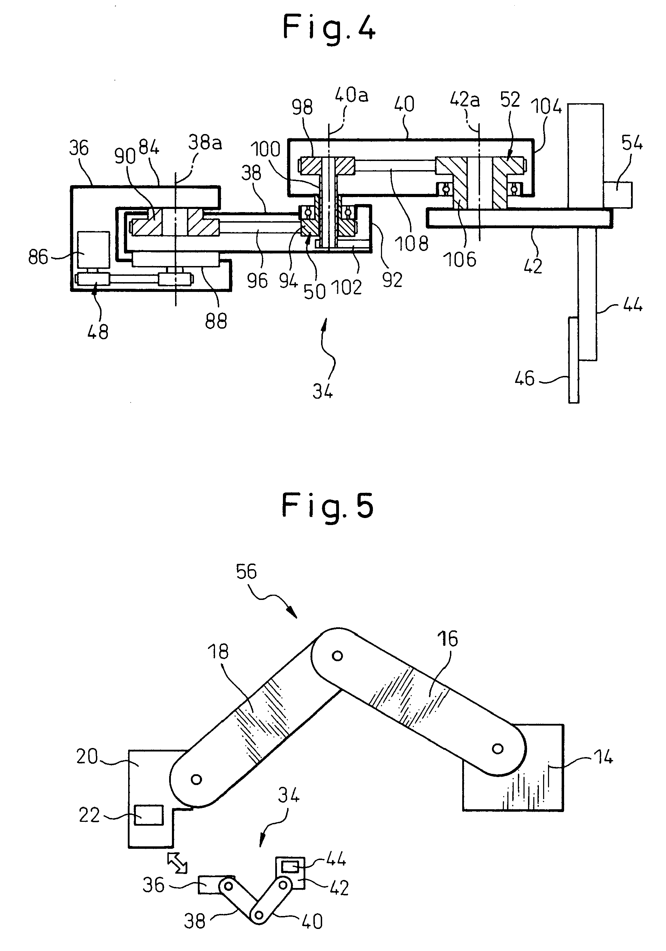

Referring again to Figs. 1 and 2, the formed article taking-out apparatus 10 further includes an auxiliary arm assembly 34 that may optionally be provided in addition to the main horizontal articulated arm structure described above. The auxiliary arm assembly 34 includes an intermediate base 36 detachably attached to the third arm 20, separately from the elevating arm 22; a fourth arm 38 attached to the intermediate base 36 in a manner rotatable about a fourth axis 38a parallel with the third axis 20a; a fifth arm 40 attached to the fourth arm 38 in a manner rotatable about a fifth axis 40a parallel with the fourth axis 38a; a sixth arm 42 attached to the fifth arm 40 in a manner rotatable about a sixth axis 42a parallel with the fifth axis 40a; and a second elevating arm 44 attached to the sixth arm 42 in a linearly movable manner. A second holding member 46 (Fig. 4), such as a grasper (or a hand), a suction retainer, etc., that can hold objects (a formed article, its appendage, etc.) in a forming die of the forming machine 12, is mounted on the second elevating arm 44.

As shown in Fig. 4, the auxiliary arm assembly 34 is provided with a fourth-arm driving mechanism 48 driving the fourth arm 38 for rotation about the fourth axis 38a; a fifth-arm driving mechanism 50 driving the fifth arm 40 for rotation about the fifth axis 40a in a manner interlocking with the fourth-arm driving mechanism 48; a sixth-arm driving mechanism 52 driving the sixth arm 42 for rotation about the sixth axis 42a in a manner interlocking with the fourth-arm driving mechanism 48 and the fifth-arm driving mechanism 50; and a second elevating-arm driving mechanism 54 linearly driving the second elevating arm 44 independently of the fourth-arm driving mechanism 48, the fifth-arm driving mechanism 50 and the sixth-arm driving mechanism 52.

In the auxiliary arm assembly 34, in a state where the formed article taking-out apparatus 10 is mounted on the forming machine 12 as described above, each of the fourth axis 38a, the fifth axis 40a and the sixth axis 42a is disposed vertically with respect to a floor surface F on which the forming machine 12 is installed. Therefore, the horizontal articulated arm structure configured by the first to third arms 16, 18, 20 cooperates with the auxiliary arm assembly 34 added thereto, so as to act as a horizontal articulated arm structure having an increased number of joints (or an increased degree of freedom). Also, the auxiliary arm assembly 34 is driven by the fourth-arm driving mechanism 48 to operate on the third arm 20, independently of the elevating arm 22, so as to locate the second elevating arm 44 and the second holding member 46, provided at the distal end thereof, at desired positions in a given horizontal plane on the forming machine 12. In this connection, an interlocking operation of the fourth to sixth-arm driving mechanisms 48, 50, 52 will be described below in more detail. Further, the second elevating arm 44 attached to the sixth arm 42 linearly operates by the second elevating-arm driving mechanism 54 in a direction parallel with the sixth axis 42a, so as to smoothly take the second holding member 46 in and out of the die opened in the forming machine 12.

As shown in Figs. 1 and 5, the auxiliary arm assembly 34 can be attached to or removed from, as occasion demands, the main arm structure 56 comprised of the base 14, the first arm 16, the second arm 18, the third arm 20 and the elevating arm 22 (including the holding member 24 (Fig. 3)) as well as their driving mechanisms 26, 28, 30, 32 (Fig. 3). Therefore, in a system required only to take out the formed article from the die of the forming machine 12 in a holding manner, it is sufficient that only the above-described main arm structure 56 of the formed article taking-out apparatus 10 is installed on the forming machine 12, and that the holding member 24 mounted on the elevating arm 22 is used to take out the formed article in the die of the forming machine 12. On the other hand, in a system required to also take out other objects such as an appendage (e.g., a runner) in the die in a holding manner, it is suitable that the auxiliary arm assembly 34 is additionally provided, in advance, to the above-described main arm structure 56, and that, simultaneously with (or with a desired time difference from) the taking-out of the formed article by the holding member 24, the second holding member 46 mounted on the second elevating arm 44 is used to take out other objects.

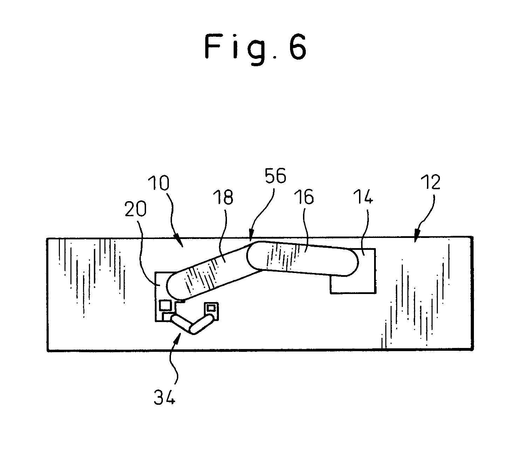

The formed article taking-out apparatus 10 configured as described above adopts the horizontal articulated arm structure and, as a result, has an advantage resulting from the fact that a space occupied by the arm is smaller than that in the formed article taking-out apparatus having the conventional rectangular-coordinate arm structure. More specifically, it is possible to mount the formed article taking-out apparatus 10 on the top of the forming machine 12 even at a site under a low ceiling, as in the illustrated embodiment. Also, as shown in Fig. 6, it is possible to facilitate the transportation of the forming machine 12, on which the formed article taking-out apparatus 10 remains mounted, by appropriately operating the first to third arms 16, 18, 20 (and the fourth to sixth arms 38, 40, 42, as occasion demands) into an orientation such as not to laterally project from the forming machine 12.

Similarly, in comparison with the formed article taking-out apparatus having the conventional vertical articulated arm structure, in which the arm moves in a vertical plane on the forming machine, the formed article taking-out apparatus 10 adopting the horizontal articulated arm structure, in which the first to third arms 16, 18, 20 (and the fourth to sixth arms 38, 40, 42, as occasion demands) move in a horizontal plane on the forming machine 12, has an advantage such that the formed article taking-out apparatus 10 can be mounted on the top of the forming machine 12 even at a site under a low ceiling. Furthermore, rotation control axes provided in the formed article taking-out apparatus 10 (in other words, the first to third-arm driving mechanisms 26, 28, 30) generally require mechanical structural components fewer than those for the linear control axes in the rectangular-coordinate arm structure, which contributes to the reduction of the manufacturing costs of the formed article taking-out apparatus 10.

Moreover, the formed article taking-out apparatus 10 with the horizontal articulated arm structure is not structured as a robot with a wrist axis, as the formed article taking-out apparatus with the conventional vertical articulated arm structure, but is provided with the holding member 24 (or the second holding member 46) mounted on the linearly driven elevating arm 22 (or the second elevating arm 44) attached to the distal end of the rotating arm structure, so that it is possible to easily and accurately take the holding member 24 (or the second holding member 46) in and out of the die opened in the forming machine 12, without using a longer holding member that is inconvenient to handle. Still further, relative to the main arm structure 56 for taking out a main object (e.g., a formed article) in the forming machine 12, it is possible to attach or remove the auxiliary arm assembly 34 for taking out another object (e.g., a runner) in the forming machine 12 as occasion demands, so that it is possible to solve the problem of a surplus mechanism. The formed article taking-out apparatus 10 possessing the above several advantages has a significantly high degree of freedom and high usefulness, in comparison with a conventional horizontal articulated robot generally referred to as a SCARA robot.

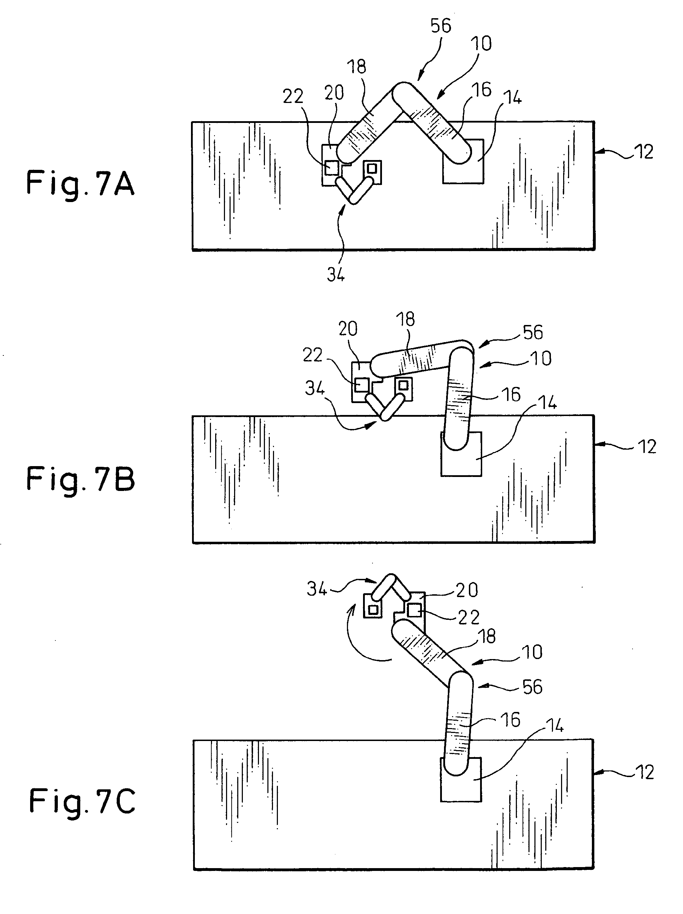

Moreover, the formed article taking-out apparatus 10 configured as described above is surely adaptable, with no problem, to an application where the formed article is required, due to its large dimension, to be fully displaced into a predetermined location sufficiently spaced from the forming machine 12, such as a case where the formed article taking-out apparatus 10 is mounted on the relatively large forming machine 12. This effective operation will be described, with reference to an example of a formed article taking-out operation by the formed article taking-out apparatus 10, as shown in Figs. 7A to 7C.

In the formed article taking-out operation as illustrated, the main arm structure 56 and the auxiliary arm assembly 34 are first appropriately operated, so as to make the holding member 24 (Fig. 3) and the second holding member 46 (Fig. 4) hold the formed article and its appendage (e.g., a runner) in the die of the forming machine 12 (Fig. 7A). Next, the main arm structure 56 and the auxiliary arm assembly 34 are operated to take out the formed article and its appendage from the die. At this time, the formed article and its appendage are required to be moved in a predetermined direction (e.g., in a normal direction) with respect to a forming surface of the die so as to be removed from the forming surface substantially simultaneously in its entirety, and therefore, the holding member 24 (Fig. 3) and the second holding member 46 (Fig. 4) should be moved away from the forming surface while maintaining the orientation thereof determined at an instant when holding the formed article and its appendage.

Next, the elevating arm 22 and the second elevating arm 44 are operated to shift the formed article and its appendage to a position where they do not collide with the forming machine 12, and thereafter, the formed article and its appendage are fully displaced outside the forming machine 12. In this connection, the formed article taking-out apparatus with the horizontal articulated arm structure, disclosed in the preceding patent application (Japanese Patent Application No. 2004-64666), is configured such that the third arm (corresponding to the third arm 20 of the formed article taking-out apparatus 10) is moved in a horizontal plane while maintaining a constant orientation in a manner interlocking with the motion of either one or both of the first and second arms (corresponding to the first and second arms 16, 18 of the same), in order to meet the above-described requirement in that the holding member (corresponding to the holding member 24 of the same) and the second holding member (corresponding to the second holding member 46 of the same) should be moved while maintaining a constant orientation during removing the formed article and its appendage from the die. In this configuration, when the formed article and its appendage are fully displaced outside the forming machine, a situation may arise where the auxiliary arm assembly (corresponding to the auxiliary arm assembly 34 of the formed article taking-out apparatus 10) attached to the third arm, that cannot change the orientation thereof, collides with the other components, such as the second arm and the like, and thus it is difficult to smoothly displace the formed article and its appendage. This situation may be reproduced in the formed article taking-out apparatus 10 as to be a condition where the formed article and its appendage, removed from the die in the state of Fig. 7A, are moved to a position where they do not collide with the forming machine 12 and, thereafter, only the main arm structure 56 is operated to fully displace the formed article and its appendage outside the forming machine 12 (Fig. 7B).

In the state of Fig. 7B, if the formed article and its appendage taken out of the forming machine 12 are large in dimensions, it is difficult to fully and smoothly displace the formed article from the forming machine 12. In the preceding patent application described above, in order to address this problem, the fixing position of the base of the formed article taking-out apparatus (corresponding to the base 14 of the formed article taking-out apparatus 10), with respect to the forming machine, can optionally be changed as occasion demands. In contrast to this measure, in the formed article taking-out apparatus 10, the first arm 16, the second arm 18 and the third arm 20 are variously operated, respectively, by the first-arm driving mechanism 26, the second-arm driving mechanism 28 and the third-arm driving mechanism 30, which are independent of each other as shown in Fig. 3, so that it is possible to transfer the elevating arm 22 (including the holding member 24) and the auxiliary arm assembly 34 (including the second holding member 46), which are attached to the third arm 20, to a location sufficiently spaced from the forming machine 12. For example, from the state of Fig. 7B, when the first arm 16, the second arm 18 and the third arm 20 operate to be shifted into an orientation such as to extend straightly in its entirety (Fig. 7C), it is possible to fully displace the formed article and its appendage, that are large in dimensions, into a predetermined location sufficiently spaced from the forming machine 12, without being obstructed by the components of the taking-out apparatus.

The forming machine 12, provided with the formed article taking-out apparatus 10 having various advantages described above, can solve the problems occurring due to the provision of the conventional formed article taking-out apparatus with the rectangular-coordinate arm structure or the vertical articulated arm structure, and also can fully displace the formed article into a sufficiently spaced predetermined location, without being obstructed by the components of the formed article taking-out apparatus 10.

Referring again to Fig. 3, the configuration of the main arm structure 56 of the formed article taking-out apparatus 10 will be described in more detail.

The base 14 is formed as a hollow structure having excellent mechanical strength. A bifurcated joint section 58 is provided at an upper part of the base 14, and one end of the first arm 16 is received in a sandwiched manner within the joint section 58 and supported therein pivotably about the first axis 16a. The first-arm driving mechanism 26 having a motor 60 and a reduction gear 62 is mounted on the joint section 58 of the base 14, and the first arm 16 fixed to the output end of the reduction gear 62 is driven for rotation about the first axis 16a under the output power of the motor 60.

The joint section 58 of the base 14 is further provided with a first-arm support member 64 at a position substantially opposite to the first-arm driving mechanism 26. In the illustrated embodiment, the first-arm support member 64 is configured by a hollow sleeve and a bearing, disposed coaxially with the first axis 16a. The first-arm support member 64 supports the first arm 16 with respect to the base 14 in a manner smoothly rotatable about the first axis 16a.

The first arm 16 is formed as a hollow structure having excellent mechanical strength. A bifurcated joint section 66 is provided at the other end of the first arm 16, and one end of the second arm 18 is received in a sandwiched manner within the joint section 66 and supported therein pivotably about the second axis 18a. The second-arm driving mechanism 28 having a motor 68 and a reduction gear 70 is mounted on the joint section 66 of the first arm 16, and the second arm 18 fixed to the output end of the reduction gear 70 is driven for rotation about the second axis 18a under the output power of the motor 68.

The joint section 66 of the first arm 16 is further provided with a second-arm support member 72 at a position substantially opposite to the second-arm driving mechanism 28. In the illustrated embodiment, the second-arm support member 72 is configured by a hollow sleeve and a bearing, disposed coaxially with the second axis 18a. The second-arm support member 66 supports the second arm 18 with respect to the first arm 16 in a manner smoothly rotatable about the second axis 18a.

The second arm 18 is formed as a hollow structure having excellent mechanical strength. A downwardly-facing joint section 74 is provided at the other end of the second arm 18, and one end of the third arm 20 is supported on the joint section 74 pivotably about the third axis 20a. The third-arm driving mechanism 30 having a motor 76 and a reduction gear 78 is mounted on the joint section 74 of the second arm 18, and the third arm 20 fixed to the output end of the reduction gear 78 is driven for rotation about the third axis 20a under the output power of the motor 76.

The joint section 74 of the second arm 18 is further provided with a third-arm support member 80. In the illustrated embodiment, the third-arm support member 80 is configured by the reduction gear 78 of the third-arm driving mechanism 30 under another function thereof. The third-arm support member 80 supports the third arm 20 with respect to the second arm 18 in a manner smoothly rotatable about the third axis 20a.

The third arm 20 is formed as a hollow structure having excellent mechanical strength. The elevating arm 22 having a guide structure and extending downward in parallel with the third axis 20a is mounted at the other end of the third arm 20. The elevating-arm driving mechanism 32 having a motor (not shown) and a reduction gear (not shown) is mounted on the upper side of the third arm 20, opposite to the elevating arm 22, and the holding member 24 attached to the elevating arm 22 is linearly driven in a direction parallel with the third axis 20a under the output power of the motor.

As described above, in the main arm structure 56 configured entirely from a hollow structure, the first arm 16, the second arm 18 and the third arm 20 can operate lightly and independent of each other under the output power of the driving mechanisms 26, 28, 30 for an exclusive use, respectively. Further, the joint sections 58, 66, 74 of the respective arms 16, 18, 20 are configured so that the arm height is gradually lowered in the order from the base 14 to the elevating arm 22, so that it is possible to provide the formed article taking-out apparatus 10 with a low profile to give a shorter projecting length in a height direction.

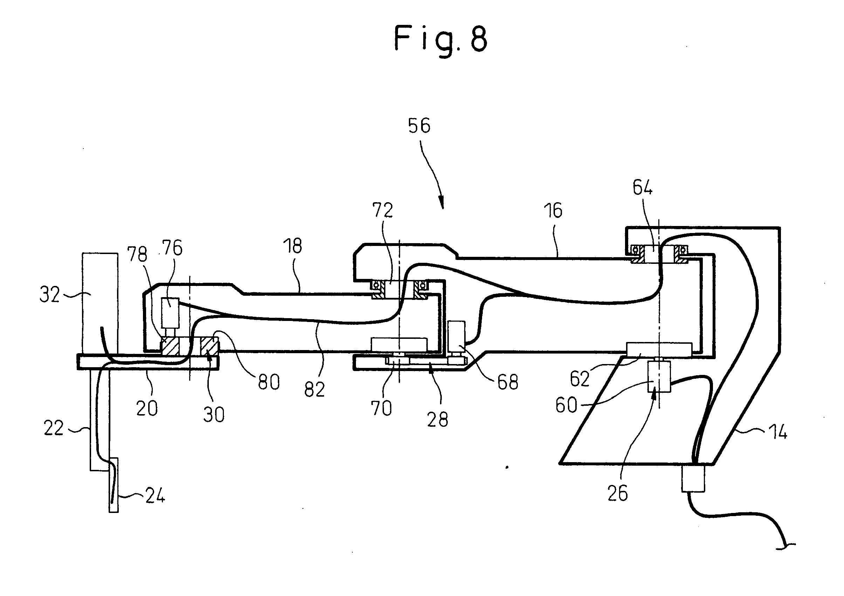

Further, in the main arm structure 56 configured from a hollow structure in its entirety, an umbilical member 82 including cables and/or hoses for power supply (such as an electric power, air, etc.) and signal transmission, which are connected with the first-arm driving mechanism 26, the second-arm driving mechanism 28, the third-arm driving mechanism 30, the elevating-arm driving mechanism 32 and the holding member 24, can be accommodated and laid in the hollow regions of the base 14, the first arm 16, the second arm 18 and the third arm 20, as shown in Fig. 8. In this connection, the umbilical member 82 is laid and inserted through the hollow regions of the first-arm support member 64, the second-arm support member 72 and the third-arm support member 80, each of which has a hollow structure.
According to this configuration, it is possible to prevent the umbilical member 82 from being entangled with the main arm structure 56 or interfering with outside structures during the operation of the main arm structure 56. In this respect, instead of the hollow structures of the first-arm support member 64, the second-arm support member 72 and the third-arm support member 80, the reduction gears 62, 70, 78 of the first-arm driving mechanism 26, the second-arm driving mechanism 28 and the third-arm driving mechanism 30 may have the hollow structures, respectively, and the umbilical member 82 may be inserted through the hollow regions thereof.

Referring now to Fig. 4, the configuration of the auxiliary arm assembly 34 of the formed article taking-out apparatus 10 will be described in more detail.

The intermediate base 36 is formed as a hollow structure having excellent mechanical strength. A bifurcated joint section 84 is provided at one end of the intermediate base 36, and one end of the fourth arm 38 is received in a sandwiched manner within the joint section 84 and supported therein pivotably about the fourth axis 38a. The fourth-arm driving mechanism 48 having a motor 86 and a reduction gear 88 is mounted on the joint section 84 of the intermediate base 36, and the fourth arm 38 fixed to the output end of the reduction gear 88 is driven for rotation about the fourth axis 38a under the output power of the motor 86.

The joint section 84 of the intermediate base 36 is further provided with a fourth arm support member 90 at a position substantially opposite to the fourth-arm driving mechanism 48. The fourth arm support member 90 is constructed as a hollow pulley, the hollow shaft portion thereof being fixed to the intermediate base 36 and the annular portion thereof being accommodated in the hollow region of the fourth arm 38, so as to support the fourth arm 38 with respect to the intermediate base 36 in a manner smoothly rotatable about the fourth axis 38a.

The fourth arm 38 is formed as a hollow structure having excellent mechanical strength. An upwardly-facing joint section 92 is provided at the other end of the fourth arm 38, and one end of the fifth arm 40 is supported on the joint section 92 pivotably about the fifth axis 40a. The fifth-arm driving mechanism 50 having a hollow pulley 94 is mounted on the joint section 92 of the fourth arm 38. The pulley 94 is rotatably supported on the fourth arm 38 through a bearing, in which the annular portion of the pulley is accommodated in the hollow region of the fourth arm 38 and the hollow shaft portion of the pulley protrudes outside the fourth arm 38 with its distal end being fixed to the fifth arm 40. In the hollow region of the fourth arm 38, the pulley 94 is connected with the fourth-arm support member (or a pulley) 90 through a belt 96.

The joint section 92 of the fourth arm 38 is further provided with a fifth-arm support member 98 received coaxially in the hollow region of the pulley 94. The fifth-arm support member 98 is constructed as a hollow pulley, the hollow shaft portion 100 thereof being slidably received in the pulley 94 and fixed at the distal end thereof to the fourth arm 38 through a fixing element 102. Further, the annular portion of the fifth-arm support member 98 is accommodated in the hollow region of the fifth arm 40, so as to support the fifth arm 40 with respect to the fourth arm 38 in a manner smoothly rotatable about the fifth axis 40a.

The fifth arm 40 is formed as a hollow structure having excellent mechanical strength. A downwardly-facing joint section 104 is provided at the other end of the fifth arm 40, and one end of the sixth arm 42 is supported on the joint section 104 pivotably about the sixth axis 42a. The sixth-arm driving mechanism 52 having a hollow pulley 106 is mounted on the joint section 104 of the fifth arm 40. The pulley 106 is rotatably supported on the fifth arm 40 through a bearing, in which the annular portion of the pulley is accommodated in the hollow region of the fifth arm 40 and the hollow shaft portion of the pulley protrudes outside the fifth arm 40 with its distal end being fixed to the sixth arm 42. In the hollow region of the fifth arm 40, the pulley 106 is connected with the fifth-arm support member (or a pulley) 98 through a belt 108. In this respect, the pulley 106 constituting the sixth-arm driving mechanism 52 also acts as a sixth-arm support member, and supports the sixth arm 42 with respect to the fifth arm 40 in a manner smoothly rotatable about the sixth axis 42a.

The sixth arm 42 is formed as a hollow structure having excellent mechanical strength. The second elevating arm 44 having a guide structure and extending downward in parallel with the sixth axis 42a is mounted at the other end of the sixth arm 42. The second elevating-arm driving mechanism 54 having a motor (not shown) and a reduction gear (not shown) is mounted on the upper side of the sixth arm 42, opposite to the second elevating arm 44, and the second holding member 46 attached to the second elevating arm 44 is linearly driven in a direction parallel with the sixth axis 42a under the output power of the motor.

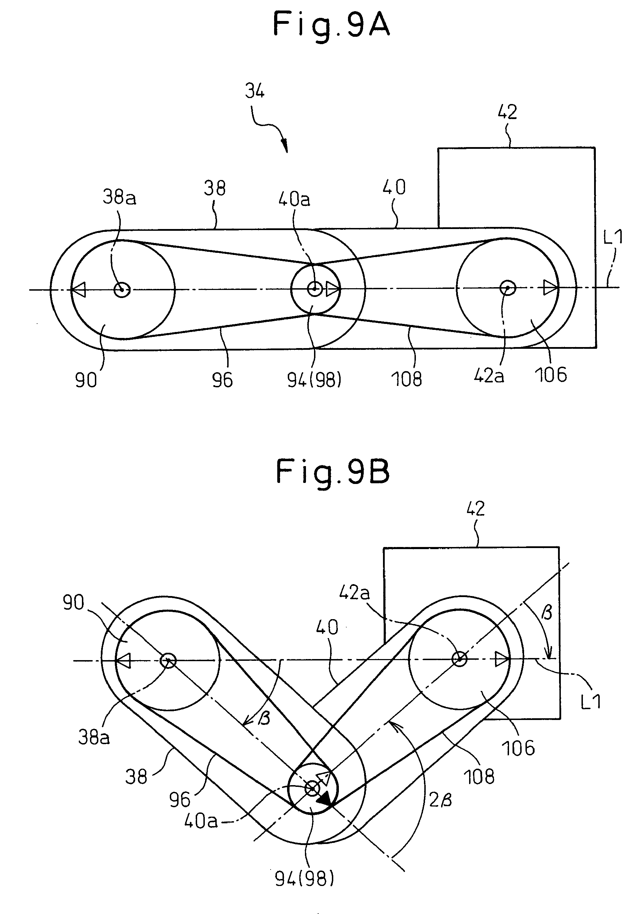

As described above, in the auxiliary arm assembly 34 configured from a hollow structure in its entirety, the fourth arm 38, the fifth arm 40 and the sixth arm 42 can operate lightly in a manner interlocked with each other under the output power of the fourth-arm driving mechanism 48 mounted on the intermediate base 36. This interlocking mechanism will be described with reference to Figs. 9A to 10.

In this connection, the illustrated embodiment is premised for ensuring a required interlocking operation that the diameter ratio of the annular portion of the fourth-arm support member (or a pulley) 90 to the annular portion of the pulley 94 of the fifth-arm driving mechanism 50 is set to 2:1, and the diameter ratio of the annular portion of the fifth-arm support member (or a pulley) 98 to the annular portion of the pulley 106 of the sixth-arm driving mechanism 52 is set to 1:2. Further, it is designed that the inter-joint distance of the fourth arm 38 (i.e., the distance between the fourth axis 38a and the fifth axis 40a) is identical to the inter-joint distance of the fifth arm 40 (i.e., the distance between the fifth axis 40a and the sixth axis 42a). It should be noted that Figs. 9A to 10 typically show the interlocking mechanism of the auxiliary arm assembly 34 in a plan view, wherein triangles marked on the respective pulleys 90, 94 (98), 106 clarify the rotating positions thereof.

First, as shown in Fig. 9A, the fourth arm 38 and the fifth arm 40 are disposed in a straightly extending orientation, so that the fourth axis 38a, the fifth axis 40a and the sixth axis 42a are positioned on a straight line L1. From this orientation, as shown in Fig. 9B, the fourth-arm driving mechanism 48 (Fig. 4) drives the fourth arm 38 to rotate about the fourth axis 38a in a clockwise direction by an angle β. In the meantime, the pulley 90 is fixed to the intermediate base 36 (Fig. 4) and, therefore, does not rotate. On the other hand, the pulley 94 connected with the pulley 90 through the belt 96 is shifted around the pulley 90 by an angle β, while following the rotation of the fourth arm 38, and thereby rotates about the fifth axis 40a in a counterclockwise direction by an angle 2β relative to the fourth arm 38, according to the diameter ratio described above. Following this rotation, the fifth arm 40 fixed to the pulley 94 rotates with respect to the fourth arm 38 about the fifth axis 40a by an angle 2β in a counterclockwise direction.

During a period when the pulley 94 rotates about the fifth axis 40a, the pulley 98 disposed coaxially with the pulley 94 is fixed to the fourth arm 38 and, therefore, does not rotate (marked by a black triangle). On the other hand, the pulley 106 connected with the pulley 98 through the belt 108 is shifted around the pulley 98 by an angle 2β, while following the above-described rotation of the fifth arm 40, and thereby rotates about the sixth axis 42a in a clockwise direction by an angle β relative to the fifth arm 40, according to the diameter ratio described above. Following this rotation, the sixth arm 42 fixed to the pulley 106 rotates with respect to the fifth arm 40 about the sixth axis 42a by an angle β in a clockwise direction.

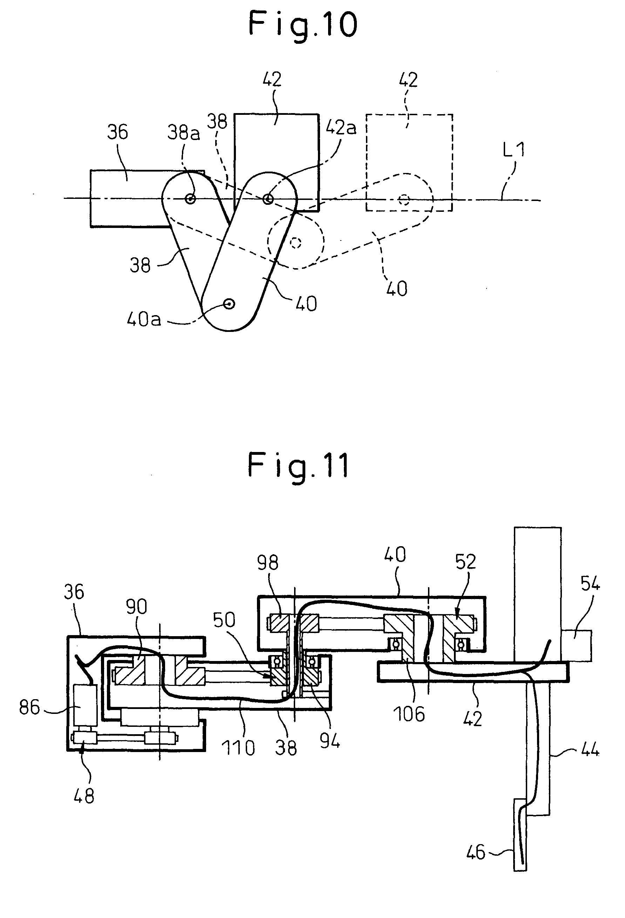

As described above, when the fourth arm 38 rotates about the fourth axis 38a by an angle β in a clockwise direction, the fifth arm 40 rotates about the fifth axis 40a by an angle 2β in a counterclockwise direction and the sixth arm 42 rotates about the sixth axis 42a by an angle β in a clockwise direction, in an interlocking manner (Fig. 9B). As a result, the sixth arm 42 maintains an orientation determined before the fourth arm 38 rotates (Fig. 9A), as illustrated. Further, as described above, the inter-joint distance of the fourth arm 38 is identical to that of the fifth arm 40, so that the geometry defined by interconnecting the fourth axis 38a, the fifth axis 40a and the sixth axis 42a, as viewed in Fig. 9B, always represents an isosceles triangle with a base on the straight line L1. Therefore, as shown in Fig. 10, during a period when the fourth arm 38 rotates about the fourth axis 38a, the sixth axis 42a is constantly shifted along the straight line L1 and the sixth arm 42 operates a linear motion while maintaining the initial orientation.

As described above, the auxiliary arm assembly 34 having the above-described interlocking mechanism is configured such that the fifth arm 40 and the sixth arm 42 are not driven by a drive source for exclusive use but are interlocked with the operation of the fourth arm 38, in order to meet the requirement in that the second holding member 46 should be moved while maintaining the orientation thereof, determined at an instant when holding the formed article and its appendage, during removing the formed article, etc., from the die of the forming machine 12. However, in a way similar to the characterizing configuration of the main arm structure 56, driving mechanisms for exclusive use, independent of each other, may be provided respectively for the fourth arm 38, the fifth arm 40 and the sixth arm 42. In this alternative arrangement, the driving mechanisms may be independently controlled appropriately so as to move the second holding member 46 while maintaining its constant orientation.

In the auxiliary arm assembly 34, in a manner similar to the main arm structure 56, an umbilical member 110 including cables and/or hoses for power supply (such as an electric power, air, etc.) and signal transmission, which are connected with the fourth-arm driving mechanism 48, the elevating-arm driving mechanism 54 and the second holding member 46, can be accommodated and laid within the hollow regions of the intermediate base 36, the fourth arm 38, the fifth arm 40 and the sixth arm 42, as shown in Fig. 11. In this connection, the umbilical member 110 is laid and inserted through the hollow regions of the pulleys 90, 94, 98, 106, each of which has the hollow structure. According to this configuration, it is possible to prevent the umbilical member 110 from being entangled with the auxiliary arm assembly 34 or interfering with outside structures during the operation of the auxiliary arm assembly 34.

As is apparent from the above description, according to the present invention, the formed article taking-out apparatus can be configured with the horizontal articulated arm structure, when it is installed on the forming machine, with the first axis of the former being vertically oriented, so that it is possible to mount the formed article taking-out apparatus on the top of the forming machine even at a site under a low ceiling.
Also, it is possible to facilitate the transportation of the forming machine, on which the formed article taking-out apparatus remains mounted, by appropriately operating the first to third arms into an orientation such as not to laterally project from the forming machine. Still further, the rotation control axes provided in the formed article taking-out apparatus (i.e., the first to third-arm driving mechanisms) generally require fewer mechanical structural components, which contributes to the reduction of the manufacturing cost of the formed article taking-out apparatus.

Moreover, the formed-article taking-out apparatus is not structured as a robot with a wrist axis, but is provided with the holding member mounted on the linearly driven elevating arm attached to the distal end of the rotating arm structure, so that it is possible to easily and accurately take the holding member in and out of the die opened in the forming machine, without using a longer holding member that is inconvenient to handle. Furthermore, the first arm, the second arm and the third arm can be variously operated, respectively, by the first-arm driving mechanism, the second-arm driving mechanism and the third-arm driving mechanism, which are independent of each other, and it is thus possible to transfer the elevating arm attached to the third arm to a location sufficiently spaced from the forming machine. Therefore, it is possible to fully displace the formed article with large dimensions into a predetermined location sufficiently spaced from the forming machine, without being obstructed by the components of the taking-out apparatus.

Further, relative to the main arm structure (defining from the first arm to the first elevating arm) for taking out the main object (e.g., the formed article) in the forming machine, it is possible to attach or remove the auxiliary arm assembly for taking out the other object (e.g., a runner) in the forming machine as occasion demands, so that it is possible to solve the problem of a surplus mechanism. When the auxiliary arm assembly constitutes the horizontal articulated arm structure, it is possible to mount the formed article taking-out apparatus on the top of the forming machine even at a site under a low ceiling. Still further, it is possible to easily and accurately take the second holding member, mounted on the second elevating arm, in and out of the die opened in the forming machine.

While the invention has been described with reference to specific preferred embodiments, it will be understood by those skilled in the art that various changes and modifications may be made thereto without departing from the scope of the following claims.

## Claims

1. A formed article taking-out apparatus (10) for use with a forming machine (12), **characterized in that** it comprises:
a base (14) capable of being secured to a forming machine;
a first arm (16) attached to said base in a manner rotatable about a first axis (16a);
a second arm (18) attached to said first arm in a manner rotatable about a second axis (18a) parallel with said first axis;
a third arm (20) attached to said second arm in a manner rotatable about a third axis (20a) parallel with said second axis;
an elevating arm (22) attached to said third arm in a linearly movable manner;
a holding member (24) mounted on said elevating arm and capable of holding an object in the forming machine;
a first-arm driving mechanism (26) driving said first arm for rotation about said first axis;
a second-arm driving mechanism (28) driving said second arm for rotation about said second axis, independently of said first-arm driving mechanism;
a third-arm driving mechanism (30) driving said third arm for rotation about said third axis, independently of said first-arm driving mechanism and said second-arm driving mechanism; and
an elevating-arm driving mechanism (32) linearly driving said elevating arm, independently of said first-arm driving mechanism, said second-arm driving mechanism and said third-arm driving mechanism.

2. A formed article taking-out apparatus, as set forth in claim 1, further comprising an auxiliary arm assembly (34) attached to said third arm in a manner operatable independently of said elevating arm; and a second holding member (46) mounted on said auxiliary arm assembly and capable of holding another object in the forming machine.

3. A formed article taking-out apparatus, as set forth in claim 2, wherein said auxiliary arm assembly includes an intermediate base (36) detachably attached to said third arm; a fourth arm (38) attached to said intermediate base in a manner rotatable about a fourth axis (38a) parallel with said third axis; a fifth arm (40) attached to said fourth arm in a manner rotatable about a fifth axis (40a) parallel with said fourth axis; a sixth arm (42) attached to said fifth arm in a manner rotatable about a sixth axis (42a) parallel with said fifth axis; a second elevating arm (44) attached to said sixth arm in a linearly movable manner; and said second holding member mounted on said second elevating arm.

4. A formed article taking-out apparatus, as set forth in claim 1, wherein each of said first arm, said second arm and said third arm has a hollow structure; and wherein an umbilical member (82), including a power supply cable connected to said first-arm driving mechanism, said second-arm driving mechanism, said third-arm driving mechanism and said elevating-arm driving mechanism, is laid and accommodated in hollow regions of said first arm, said second arm and said third arm.

5. A formed article taking-out apparatus, as set forth in claim 4, further comprising a first-arm support member (64) supporting said first arm in a manner rotatable relative to said base; a second-arm support member (72) supporting said second arm in a manner rotatable relative to said first arm; and a third-arm support member (80) supporting said third arm in a manner rotatable relative to said second arm; wherein each of said first-arm support member, said second-arm support member and said third-arm support member has a hollow structure; and wherein said umbilical member is laid and inserted through hollow regions of said first-arm support member, said second-arm support member and said third-arm support member.

6. A forming machine comprising said formed article taking-out apparatus as set forth in any one of claims 1 to 5.
